# EUROPÄISCHE PATENTANMELDUNG

(11) **EP 1 801 044 A1**
(43) Veröffentlichungstag der Anmeldung: **27.06.2007**
(21) Anmeldenummer: 05028107.0
(22) Anmeldetag: 21.12.2005
(51) Int. Cl.: B65G 47/53, B65B 5/06

(54) **Transportvorrichtung mit einer ersten und einer zweiten Fördereinrichtung**

(71) Anmelder: Albert Handtmann Maschinenfabrik GmbH & Co. KG, 88400 Biberach (DE)
(72) Erfinder: Wolf, Andreas, 70372 Stuttgart (DE); Mayer, Steffen, 71227 Rutesheim (DE)
(74) Vertreter: Grünecker, Kinkeldey, Stockmair & Schwanhäusser Anwaltssozietät

(57) **Zusammenfassung**

Die Erfindung betrifft eine Transportvorrichtung mit einer Artikel von der ersten Fördereinrichtung übernehmenden zweiten Fördereinrichtung, wobei die Fördereinrichtungen je ein flexibles Fördermittel umfassen, die jeweils um zumindest zwei Umlenkelemente endlos umlaufend ausgebildet sind, und beide Fördermittel sowohl ein Obertrum zum Bewegen der Artikel, als auch ein Untertrum aufweisen, wobei jede Fördereinrichtung eine Oberfläche aufweist, in der zumindest teilweise das jeweilige Obertrum des jeweiligen Fördermittels die Artikel transportierend angeordnet ist, und sich die Oberflächen der Fördereinrichtungen zumindest teilweise in einer Ansicht senkrecht von oben auf die Oberfläche überlappen, dadurch gekennzeichnet, dass die Fördermittel so angeordnet sind, dass der Abstand H zwischen dem Obertrum des einen Fördermittels und dem Untertrum des anderen Fördermittels kleiner als die Summe aus dem größten Abstand h₁ von Obertrum zu Untertrum des einen Fördermittels und dem größten Abstand h₂ von Obertrum zu Untertrum des anderen Fördermittels ist.

## Beschreibung

Die Erfindung betrifft eine Transportvorrichtung mit einer ersten Fördereinrichtung und einer Artikel von der ersten Fördereinrichtung übernehmenden zweiten Fördereinrichtung, wobei die Fördereinrichtungen je ein flexibles Fördermittel umfassen, die jeweils um zumindest zwei Umlenkelemente endlos umlaufend ausgebildet sind, und beide Fördermittel sowohl ein Obertrum zum Bewegen der Artikel als auch ein Untertrum aufweisen, wobei jede Fördereinrichtung eine Oberfläche aufweist, in der zumindest teilweise das jeweilige Obertrum des jeweiligen Fördermittels die Artikel transportierend angeordnet ist, und sich die Oberflächen der Fördereinrichtungen zumindest teilweise in einer Ansicht senkrecht von oben auf die Oberflächen überlappen.

Solche Transportvorrichtungen werden üblicher Weise auch bei der Herstellung und Verpackung von Lebensmitteln eingesetzt, insbesondere auch beim Verpacken von Fleischwaren, wie etwa Wurst. Die Transportvorrichtungen transportieren somit Artikel, die auch als Waren oder Werkstücke bezeichnet werden können. Dabei werden Artikel mit hoher Geschwindigkeit mit der ersten Fördereinrichtung zu der zweiten Fördereinrichtung bewegt. Ein Handhabungssystem, wie etwa ein Roboter, befördert die Artikel dann auf die zweite Fördereinrichtung. Das Handhabungssystem muss die Artikel anheben, quer verfahren und dann wieder absenken. Die Artikel legen daher einen bestimmten Weg zurück.

Handhabungssysteme, wie beispielsweise Linearachsen oder Roboter, werden immer häufiger in Verbindung mit Förderbändern zur Beschickung bzw. Entladung von Maschinen eingesetzt. Dabei müssen die Handhabungssysteme in der Lage sein, die Waren oder Artikel, die in einer vororientierten Lage oder vollkommen ungeordnet auf einem Förderband ankommen, vom Band entweder im Stillstand oder bei laufendem Band abzugreifen und anschließend einer bestimmten Verwendung, etwa einem Verpackungsvorgang, zuzuführen.

Solche Transportvorrichtungen und Handhabungssysteme finden nicht nur beim Verpacken von Lebensmitteln Verwendung, sondern auch beim Transportieren und Übergeben von herkömmlichen Maschinenbauwerkstücken.

Es ist Aufgabe der vorliegenden Erfindung, die Transportgeschwindigkeiten und Abfertigungsgeschwindigkeiten in einer solchen Vorrichtung zu erhöhen.

Dies wird erfindungsgemäß bei einer gattungsgemäßen Transportvorrichtung dadurch erreicht, dass die Fördermittel so angeordnet sind, dass der Abstand H zwischen dem Obertrum des einen Fördermittels und dem Untertrum des anderen Fördermittels kleiner als die Summe aus dem größten Abstand h₁ von Obertrum zu Untertrum des einen Fördermittels und dem größten Abstand h₂ von Obertrum zu Untertrum des anderen Fördermittels ist.

Bei einer solchen Ausgestaltung der Fördermittel, ist es für ein Handhabungssystem möglich, die zweimal zurückzulegenden Höhenwege zu vermindern, und dadurch Zeit zu sparen. Der Durchsatz an Artikeln in einer erfindungsgemäßen Transportvorrichtung wird dadurch erheblich erhöht. Packzeiterspamisse von bis zu 20 % stellen sich ein.

Vorteilhafte Ausgestaltungsformen werden in den Unteransprüchen näher beschrieben und beansprucht.

Besonders vorteilhaft ist ein Ausführungsbeispiel, in dem zumindest eines der Fördermittel einen geschlossenen Fördergurt und/oder eine Gliederkette umfasst. Der Fördergurt oder die Gliederkette kann dabei unterschiedliche Dicken oder Oberflächenprofilierungen (z.B. ein Stollenband mit Mitnehmern) haben. Fördergurte und Gliederketten sind auf dem Markt günstig zu erstehende Komponenten. Eine solche Transportvorrichtung kann somit kostengünstig erstellt werden.

Wenn die Fördermittel quer, vorzugsweise orthogonal zueinander, angeordnet sind, ist sichergestellt, dass die zueinander parallelen Oberflächen der Fördermittel besonders nahe aneinander heranbringbar sind. Zusätzliche Gleiteinrichtungen können eingespart werden, was zu einer noch kostengünstigeren Ausgestaltung der Erfindung führt. Dies ist besonders auch dann der Fall, wenn sich die Fördermittel kreuzen, also sich ein Fördermittel über das andere, vorzugsweise orthogonal, hinwegbewegt.

In einem weiteren Ausführungsbeispiel hat es sich als besonders vorteilhaft erwiesen, wenn die Fördermittel parallel zueinander angeordnet sind. Die Antriebskinematiken können dann besonders einfach realisiert werden.

Wenn der Abstand d zwischen dem Obertrum des einen Fördermittels und dem Obertrum des anderen Fördermittels weniger als das zweifache der Dicke des Ober- oder Untertrums eines Fördermittels beträgt, vorzugsweise weniger als das 1,2-fache, weiter vorteilhaft weniger als das 0,75-fache, so können auf effiziente Weise die von dem Handhabungssystem zurückzulegenden Wege minimiert werden. Zeitersparnis ist die Folge.

Wenn die Umlenkelemente als Rollen ausgeformt sind, so ist verhindert, dass das Fördermittel durch die Umlenkelemente abgewetzt wird. Dadurch wird die Lebensdauer weiter erhöht.

In einer weiteren Ausführungsform hat es sich als vorteilhaft herausgestellt, wenn die Fördereinrichtung einen Antrieb aufweist, der in antreibendem Wirkzusammenhang mit dem Fördermittel steht. Es lassen sich dann in vorteilhafter Weise konventionelle Antriebe verwenden, was Beschaffungsprobleme vermeidet.

Wenn der Antrieb in Wirkzusammenhang mit einer Rolle steht, so lässt sich der Antrieb einfach an die Rolle koppeln und so das Fördermittel antreiben.

In einem weiteren Ausführungsbeispiel zeigt es sich als vorteilhaft, wenn das Fördermittel ein Endlosförderband umfasst, da dann auf ein dauerndes Nachführen des Fördermittels verzichtet werden kann.

In einer weiteren vorteilhaften Ausführungsform ist die Transportvorrichtung so ausgestaltet, dass die erste Fördereinrichtung die Artikel zuführt und die zweite Fördereinrichtung die Artikel abführt.

Besonders einfach lassen sich Ober- und Untertrum des einen Fördermittels in einer weiteren vorteilhaften Ausführungsform anordnen, wenn das Ober- und Untertrum des einen Fördermittels auf je einer Seite des Obertrums des anderen Fördermittels angeordnet ist.

Wenn das eine Fördermittel das Obertrum des anderen Fördermittels umschlingt, so kann das Untertrum des einen Fördermittels auch zwischen Ober- und Untertrum des anderen Fördermittels verlaufen, wodurch der Platzbedarf weiter minimiert wird.

Besonders einfach lassen sich Wartungsarbeiten an der einen Fördereinrichtung realisieren, wenn das Ober- und Untertrum des einen Fördermittels auf je einer Seite des anderen Fördermittels in einer weiteren vorteilhaften Ausführungsform angeordnet ist.

Wenn das eine Fördermittel das andere Fördermittel umschlingt, sind die spezifischen Vorteile von flexiblen Umschlingungsmitteln, wie etwa Förderbändern oder anderen Fördermitteln besonders gut nutzbar.

Wenn das die Artikel abführende Obertrum unterhalb des die Artikel zuführenden Obertrums positioniert ist, so ist in dieser vorteilhaften Ausführungsform der Artikel nur ein wenig nach oben zu bewegen. Durch ein leichtes Anlupfen wird der Artikel schon durch die trägheitsbedingte Bewegung auf das andere Obertrum versetzt.

Die Erfindung betrifft auch eine Bearbeitungsvorrichtung mit einer Transportvorrichtung nach Anspruch 1, wobei die Bearbeitungsvorrichtung eine Zuführeinrichtung, eine Verpackungsvorrichtung und/oder ein Handhabungssystem, wie etwa einen Roboter umfasst. Dadurch lässt sich platzsparend und auch zeitsparend der Artikel nach dem Bewegen über ein Handhabungssystem verpacken.
Wenn das Handhabungssystem zum Bewegen der Artikel von einem Fördermittel auf das andere Fördermittel ausgebildet ist, so können in diesem Ausführungsbeispiel vorteilhafterweise die Artikel sicher von dem einen Fördermittel auf das andere Fördermittel bewegt werden.

In einem weiteren vorteilhaften Ausführungsbeispiel ist ein Roboter zum Versetzen der Artikel von dem Fördermittel der ersten Fördereinrichtung auf das Fördermittel der zweiten Fördereinrichtung ausgebildet.

Wenn der Roboter zum eine die Artikel anhebende Bewegung von weniger als der vierfachen Dicke des Obertrums des die Artikel zuführenden Fördermittels, vorzugsweise weniger als das 2-fache oder als das 1,2-fache, weiter vorzugsweise weniger als das 0,75-fache ausgebildet ist, so lassen sich die von dem Roboter zurückzulegenden Wege weiter minimieren.

Da sogenannte Delta-Roboter besonders gute Eigenschaften aufweisen, ist es von Vorteil, wenn in einer weiteren vorteilhaften Ausführungsform der Roboter als sogenannter Delta-Roboter ausgebildet ist.

Wenn das die Artikel zuführende Fördermittel die Verpackungsvorrichtung zumindest teilweise umschließt, so lässt sich der zur Verfügung stehende Raum in dieser vorteilhaften Ausführungsform besonders gut nutzen.

Die Vorteile der Erfindung lassen sich dann noch besser darstellen, wenn in einer weiteren vorteilhaften Ausführungsform ein Artikel, ein Lebensmittel, wie eine Fleischware, zum Beispiel eine Wurst, umfasst.

Die Erfindung lässt sich besonders gut in Verbindung mit Verpackungsvorrichtungen für Lebensmittel verwenden.

Im Folgenden werden zwei unterschiedliche Anordnungsmöglichkeiten beschrieben, die die Beschickung einer Tiefziehverpackungsmaschine darstellen. In der ersten Anordnung ist das zuführende Förderband, von dem das Handhabungssystem oder der Roboter die Artikel abgreift, quer oder 90° zum Materialsfluss der Verpackungsvorrichtung angeordnet. Hierbei handelt es sich um eine platzsparende Anordnung, speziell, wenn eine gute Zugehörigkeit zur Verpackungsvorrichtung gewährleistet werden soll, oder wenn unterschiedliche Artikel oder Werkstücktypen parallel in eine Verpackungsvorrichtung eingelegt werden sollen.

Die Artikel gelangen zunächst von einer Zuführvorrichtung auf das Förderband des Roboters, werden von dort vom Roboter aufgenommen und in die Vertiefung der Verpackungsmaschine eingelegt. Überzählige oder fehlerhafte Artikel werden vom Roboter nicht verarbeitet sondern gelangen über ein weiteres Förderband in einen Rückführbehälter. In beiden Ausführungsformen wird der vom Roboter zurückgelegte Weg so gering wie möglich gehalten und eine Leistung des Einlegesystems ist maximiert. Es ist somit für die Effizienz entscheidend, so geringe Höhenunterschiede wie möglich in dieser 90°-Anordnung überbrücken zu können. Transportvorrichtungen herkömmlicher Art ermöglichten dies nicht.

Im Folgenden werden die Ausführungsbeispiele anhand einer Zeichnung näher erläutert. Es zeigen:
- Fig. 1: eine schematische Ansicht einer Transportvorrichtung nach dem Stand der Technik in einer perspektivischen Darstellung,
- Fig. 2: eine erfindungsgemäße Transportvorrichtung in einer schematischen Darstellung von oben, wobei die zwei Förderbänder sich kreuzen und bezüglich ihrer Förderrichtung orthogonal zueinander angeordnet sind,
- Fig. 3: eine erfindungsgemäße Transportvorrichtung in einer zweiten Ausführungsform, schematisch von oben dargestellt, wobei die Förderbänder bezüglich ihrer Transportrichtung zueinander parallel angeordnet sind; wobei das Fördermittel in die Seitenwange der Verpackungsvorrichtung integriert ist,
- Fig. 4: das erfindungsgemäße Prinzip des Umgriffenwerdens des Obertrums des einen Förderbandes von dem zuführenden Förderband in einer schematischen Teilansicht in perspektivischer Darstellung,
- Fig. 5: das erfindungsgemäße Prinzip des Umgriffenwerdens des gesamten abführenden Förderbandes von dem zuführenden Förderband in einer schematischen perspektivischen Darstellung,
- Fig. 6: das erfindungsgemäße Prinzip des Umgreifens der Verpackungsvorrichtung durch das zuführende Förderband und
- Fig. 7: das erfindungsgemäße Prinzip des Rückführens des Förderbandes in komprimierter Form zur Minimierung der Aufbauhöhe des Förderbandes.

In allen Figuren sind dieselben Elemente mit denselben Bezugszeichen versehen.

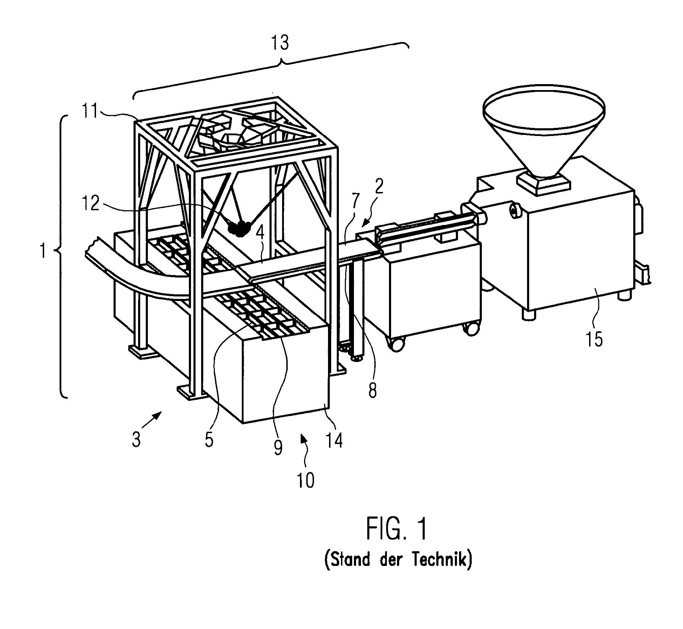

Fig. 1 zeigt eine Transportvorrichtung 1 nach dem Stand der Technik. Diese Transportvorrichtung weist eine erste Fördereinrichtung 2 auf. Artikel werden von dieser ersten Fördereinrichtung 2 zu einer zweiten Fördereinrichtung 3 transportiert. Die erste Fördereinrichtung weist dabei ein flexibles Fördermittel 4 auf. Die zweite Fördereinrichtung 3 weist ebenfalls ein flexibles Fördermittel 5 auf. Das erste Fördermittel 4 wird dabei an zwei nicht dargestellten Umlenkelementen 6 umgelenkt. Beide Fördermittel 4 und 5 bilden Endlosschlaufen.

Das erste Fördermittel 4 weist ein Obertrum 7 auf. Das erste Fördermittel 4 weist auch ein Untertrum 8 auf. Das zweite Fördermittel 5 weist auch ein Obertrum 9 und ein Untertrum 10 auf. Die Artikel oder Werkstücke werden auf dem Obertrum 7 zum Obertrum 9 befördert. Das Versetzen der Artikel wird unter Zuhilfenahme einer Handhabe 11 bewirkt. Die Handhabe 11 ist als Roboter 12 ausgeführt.

Zwischen Obertrum 7 und Untertrum 8 des ersten Fördermittels 4 ist ein Abstand h₁ vorhanden. Zwischen dem Obertrum 9 und dem Untertrum 10 des zweiten Fördermittels 5 ist ein Abstand h₂ vorhanden. Die Abstände h₁ und h₂ werden bei Verwendung von Umlenkrollen als Umlenkelemente von dem Durchmesser der Umlenkrollen 6 bestimmt. Die gesamte zweite Fördereinrichtung ist unterhalb der ersten Fördereinrichtung angeordnet. Das heißt, dass die gesamte Bauhöhe der ersten Fördereinrichtung 2 durch den Roboter 12 beim Versetzen der Artikel überwunden werden muss. Die Förderbänder, die Verwendung finden, haben eine gewisse Bauhöhe, die sich aus dem Antrieb und der Bandgurthöhe ergibt. Ein großer Höhenunterschied ist die Folge. Durch die Aufbauhöhe ergeben sich für das Handhabungssystem längere Wege bei der Beladung der Verpackungsmaschine. Für den Abgriff der Artikel ist der Obergurt entscheidend.

Es ist auch möglich, weitere Umlenkelemente zwischen den Umlenkelementen 6 an den Enden der Fördereinrichtungen 2 und 3 zu verwenden, um das Ober- und das Untertrum eines Förderbandes möglichst nahe aneinander zu positionieren.

Der Obergurt, oder auch Obertrum, ist auf der Zuführseite der ersten Förderungseinrichtung 2 vorhanden. Auf der Rückführseite ist das Untertrum 8 vorhanden. Es wird auch als Untergurt bezeichnet. Der Höhenversatz zwischen Obertgurt und Untergurt ist die Aufbauhöhe, die vom Handhabungssystem überwunden werden muss.

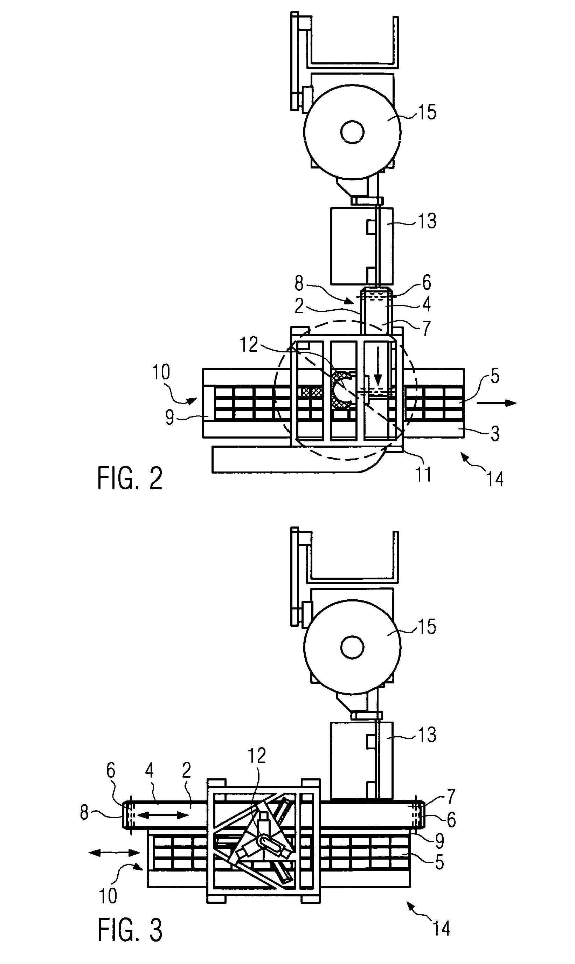

In Fig. 2 ist eine erfindungsgemäße Transportvorrichtung 1 und eine erfindungsgemäße Bearbeitungsvorrichtung dargestellt. Die Bearbeitungsvorrichtung umfasst eine Zuführvorrichtung 13 und eine Verpackungsvorrichtung 14. Lebensmittel, zum Beispiel Würste, werden aus der Beschickungsvorrichtung 15 auf die Zuführvorrichtung befördert, wobei die erste Fördereinrichtung 2, die das erste Fördermittel 4 umfasst, die Würste in den Bewegungsradius des Roboters 12 befördern, der dann die Artikel auf das zweite Fördermittel 5 der zweiten Fördereinrichtung 3 umsetzt. Die Transportrichtungen der ersten Fördereinrichtung 2 und der zweiten Fördereinrichtung 3 sind zueinander orthogonal. Die Oberflächen des Obertrums 7 des Fördermittels 4 und des Obertrums 9 des Fördermittels 5 sind zueinander parallel. Das Obertrum 7 des Fördermittels 4 führt über das Obertrum 9 des Fördermittels 5 um ein Umlenkelement 6 und dann entweder zwischen Obertrum 9 und Untertrum 10 oder unter dem Untertrum 10 zurück zu einem weiteren Umlenkelement 6. Die Umlenkelemente 6 sind als Rollen ausgeführt.

Der Roboter muss beim Versetzen der Artikel nur einen sehr kleinen Höhenversatz zurücklegen. Der Höhenversatz ist im Wesentlichen so groß wie der Abstand von der Oberfläche des Obertrums 7 zum Obertrum 9. Das Obertrum 7 ist dabei oberhalb des Obertrums 9. Die Förder- und Transportrichtungen sind durch Pfeile angedeutet. Die Richtungen können jedoch auch gegengleich sein.

In Fig. 3 ist eine weitere Ausführungsform einer erfindungsgemäßen Transportvorrichtung 1 dargestellt. Als wesentlicher Unterschied verlaufen die zwei Fördereinrichtungen 2 und 3 hier parallel zueinander bezüglich ihrer Transportrichtung. Dies ist wiederum durch Pfeile angedeutet. Die Fördereinrichtungen 2 und 3 bewegen sich dabei beide nach links oder beide nach recht. Aber auch gegengleiches Bewegen ist möglich. Die Oberflächen des Obertrums 7 und des Obertrums 9 sind dabei auf selber Höhe zueinander befindlich. Eine Umlenkeinheit, die die Artikel von der Beschickungsvorrichtung 15 auf die Zuführvorrichtung umlenkt, ist dabei nicht dargestellt.

Das Handhabungssystem 11 bewegt sich dabei im Wesentlichen in einem kugelförmigen Bewegungsraum. In Fig. 3 ist das Fördermittel in die Seitenwange der Verpackungsvorrichtung 14 integriert. Die Fördereinrichtung 3 weist seitlich des Fördermittels 5 Schutzbacken oder Abstandshalter auf. Das Fördermittel 4 umgreift die Fördereinrichtung 3, insbesondere die Schutzbacken oder Abstandhalter. Das Fördermittel 4 ist länger als das Fördermittel 5 ausgestaltet.

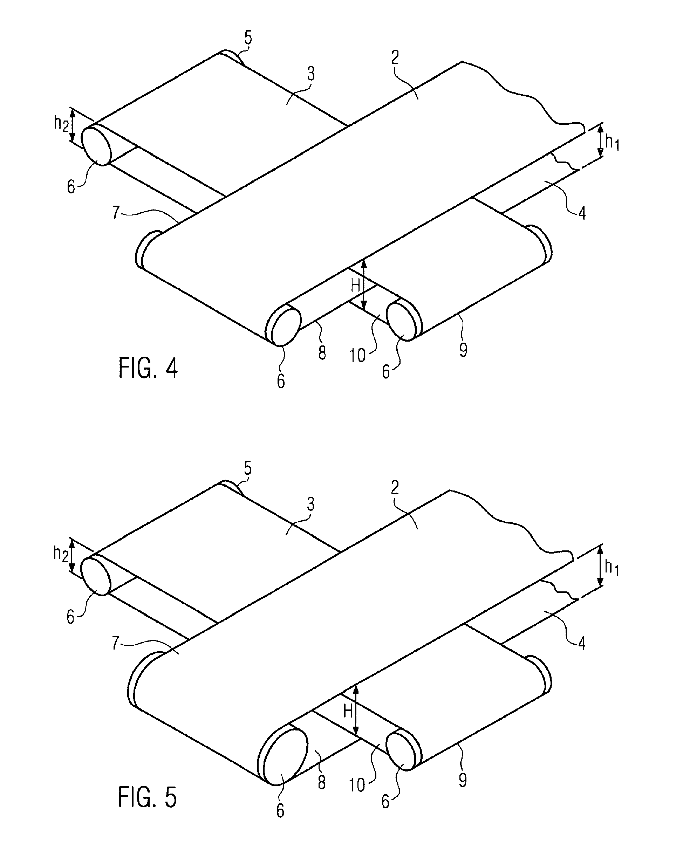

In Fig. 4 ist das Umschlingenwerden des zweiten Fördermittels 5 von dem ersten Fördermittel 4, und zwar das Umschlingenwerden nur des Obertrums 9 dieses zweiten Fördermittels 5, dargestellt.

In Fig. 5 umgreift das Fördermittel 4 dabei komplett das Fördermittel 5. Das Obertrum 7 ist dabei oberhalb des Obertrums 9, und das Untertrum 8 ist dabei unterhalb des Untertrums 10 befindlich.

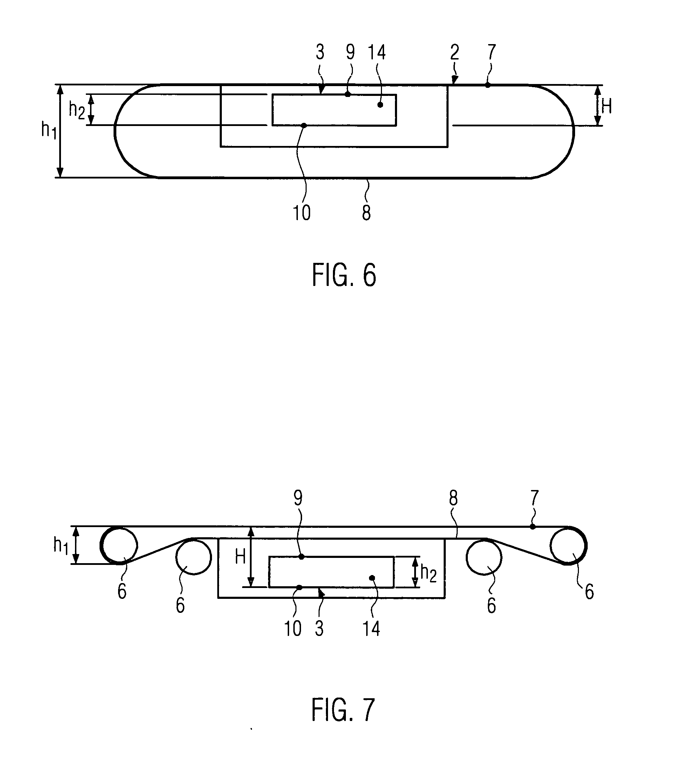

In Fig. 6 zeigt das Umgriffenwerden der Verpackungsvorrichtung 14 durch das erste Fördermittel 4.

Die erste Fördereinrichtung 2 weist zwischen Obertrum 7 und Untertrum 8 des ersten Fördermittels 4 eine Abdeckung an den Seiten auf. Die Abdeckung hat eine Aussparung in rechteckiger Form. Durch diese Aussparung greift die zweite Fördereinrichtung 3. Die zweite Fördereinrichtung 3 beinhaltet die Verpackungsvorrichtung 14. Deren Obertrum 9 und Untertrum 10 läuft somit zwischen Obertrum 7 und Untertrum 8 des ersten Fördermittels 4 der ersten Fördereinrichtung 2. Die von der ersten Fördereinrichtung 2 auf die zweite Fördereinrichtungen 3 mittels des Handhabungssystems 11 übergebenen Artikel, werden beim Liegen auf dem Obertrum 9 des zweiten Fördermittels 5 durch die Verpackungsvorrichtung 14 verpackt und weiterbefördert.

In Fig. 7 verbleibt das erste Fördermittel 4 dabei mit dem Obertrum 7 oberhalb des Obertrums 9 der zweiten Fördereinrichtung 3. Das Untertrum 8 des ersten Fördermittels 4 verläuft dabei auch oberhalb des Obertrums 9 des zweiten Fördermittels 5. Zusätzliche Umlenkelemente bringen das Untertrum 8 besonders nahe unter das Obertrum 7.

Durch die Verwendung von Gliedergurten wird auch die Reinigungsfähigkeit erhöht, da der Gurt leichter entnommen werden kann. Des Weiteren kann robuste Bandtechnik eingesetzt werden, da bei Bändern mit niedriger Höhe sonst zu filigrane Technik eingebaut werden müsste. Die Wege für das Handhabungssystem werden vermindert. Eine spezielle Verpackungsvorrichtung 14 ist etwa eine Tiefziehverpackungsmaschine.

## Patentansprüche

1. Transportvorrichtung (1) mit einer ersten Fördereinrichtung (2) und einer Artikel von der ersten Fördereinrichtung (2) übernehmenden zweiten Fördereinrichtung (3), wobei die Fördereinrichtungen (2, 3) je ein flexibles oder an das Produkt angepasstes Fördermittel (4, 5) umfassen, die jeweils um zumindest zwei Umlenkelemente (6) endlos umlaufend ausgebildet sind, und beide Fördermittel (4 und 5) sowohl ein Obertrum (7 und 9) zum Bewegen der Artikel, als auch ein Untertrum (8 und 10) aufweisen, wobei jede Fördereinrichtung (2, 3) eine Oberfläche aufweist, in der zumindest teilweise das jeweilige Obertrum (7 oder 9) des jeweiligen Fördermittels (4 oder 5) die Artikel transportierend angeordnet ist, und sich die Oberflächen der Fördereinrichtungen (2, 3) zumindest teilweise in einer Ansicht senkrecht von oben auf die Oberflächen überlappen, **dadurch gekennzeichnet, dass** die Fördermittel (4 und 5) so angeordnet sind, dass der Abstand H zwischen dem Obertrum (7) des einen Fördermittels (4) und dem Untertrum (10) des anderen Fördermittels (5) kleiner als die Summe aus dem größten Abstand h₁ von Obertrum (7) zu Untertrum (8) des einen Fördermittels (4) und dem größten Abstand h₂ von Obertrum (9) zu Untertrum (10) des anderen Fördermittels (5) ist.

2. Transportvorrichtung (1) nach Anspruch 1, **dadurch gekennzeichnet, dass** zumindest eines der Fördermittel (4 und 5) einen geschlossenen Fördergurt und/oder eine Gliederkette umfasst.

3. Transportvorrichtung (1) nach Anspruch 1 oder 2, **dadurch gekennzeichnet, dass** die Fördermittel (4 und 5) quer, vorzugsweise orthogonal zueinander angeordnet sind und sich vorzugsweise kreuzen.

4. Transportvorrichtung (1) nach Anspruch 1 oder 2, **dadurch gekennzeichnet, dass** die Fördermittel (4 und 5) parallel zueinander angeordnet sind.

5. Transportvorrichtung (1), nach einem der Ansprüche 1 - 4, **dadurch gekennzeichnet, dass** der Abstand H zwischen dem Obertrum (7) des einen Fördermittels (4) und dem Obertrum (9) des anderen Fördermittels (5) weniger als das zweifache der Dicke des Ober- oder Untertrums (7, 8, 9, 10) eines Fördermittels (4, 5) beträgt, vorzugsweise weniger als das 1,2-fache, weiter vorteilhaft weniger als das 0,75-fache.

6. Transportvorrichtung (1) nach zumindest einem der Ansprüche 1 bis 5, **dadurch gekennzeichnet, dass** die Umlenkelemente (6) als Rollen ausgeformt sind.

7. Transportvorrichtung (1) nach zumindest einem der Ansprüche 1 bis 6, **dadurch gekennzeichnet, dass** die Fördereinrichtung (2, 3) einen Antrieb aufweist, der in antreibendem Wirkzusammenhang mit dem Fördermittel (2, 3) steht.

8. Transportvorrichtung (1), nach zumindest einem der Ansprüche 6 oder 7, **dadurch gekennzeichnet, dass** der Antrieb in Wirkzusammenhang mit einer der Rollen steht.

9. Transportvorrichtung (1), nach zumindest einem der Ansprüche 1 bis 8, **dadurch gekennzeichnet, dass** das Fördermittel (4, 5) ein Endlosförderband umfasst.

10. Transportvorrichtung (1), nach zumindest einem der Ansprüche 1 bis 9, **dadurch gekennzeichnet, dass** die erste Fördereinrichtung (2) die Artikel zuführt und die zweite Fördereinrichtung (3) die Artikel abführt.

11. Transportvorrichtung (1) nach zumindest einem der Ansprüche 1 bis 10, **dadurch gekennzeichnet, dass** das Ober- und Untertrum (7, 8) des einen Fördermittels (4) auf je einer Seite des Obertrums (9) des anderen Fördermittels (5) angeordnet ist.

12. Transportvorrichtung (1) nach zumindest einem der Ansprüche 1 bis 11, **dadurch gekennzeichnet, dass** das eine Fördermittel (4) das Obertrum (9) des anderen Fördermittels (5) umschlingt.

13. Transportvorrichtung (1) nach zumindest einem der Ansprüche 1 bis 12, **dadurch gekennzeichnet, dass** das Obertrum (7) und das Untertrum (8) des einen Fördermittels (4) auf je einer Seite des anderen Fördermittels (5) angeordnet ist.

14. Transportvorrichtung (1), nach zumindest einem der Ansprüche 1 bis 13, **dadurch gekennzeichnet, dass** das eine Fördermittel (4) das andere Fördermittel (5) umschlingt.

15. Transportvorrichtung (1), nach zumindest einem der Ansprüche 1 bis 14, **dadurch gekennzeichnet, dass** das die Artikel abführende Obertrum (9) unterhalb des die Artikel zuführenden Obertrums (7) positioniert ist.

16. Bearbeitungsvorrichtung mit einer Transportvorrichtung (1) nach zumindest einem der vorhergehenden Ansprüche, **dadurch gekennzeichnet, dass** die Bearbeitungsvorrichtung eine Zuführvorrichtung (13), eine Verpackungsvorrichtung (14) und/oder ein Handhabungssystem (11), wie etwa einen Roboter (12) umfasst.

17. Bearbeitungsvorrichtung nach Anspruch 16, **dadurch gekennzeichnet, dass** das Handhabungssystem (11) zum Bewegen der Artikel von einem Fördermittel (4, 5) auf das andere Fördermittel (4, 5) ausgebildet ist.

18. Barbeitungsvorrichtung nach Anspruch 17, **dadurch gekennzeichnet, dass** ein Roboter (12), zum Versetzen der Artikel von dem Fördermittel (4) der ersten Fördereinrichtung (2) auf das Fördermittel (5) der zweiten Fördereinrichtung (3) ausgebildet ist.

19. Bearbeitungsvorrichtung nach Anspruch 18, **dadurch gekennzeichnet, dass** der Roboter (12) zum eine die Artikel anhebende Bewegung von weniger als der vierfachen Dicke des Obertrums (7) des die Artikel zuführenden Fördermittels (3), vorzugsweise weniger als das 2-fache oder als das 1,2-fache, weiter vorzugsweise weniger als das 0,75-fache ausgebildet ist.

20. Bearbeitungsvorrichtung (1) nach zumindest einem der Ansprüche 16 bis 19, **dadurch gekennzeichnet, dass** der Roboter (12) als Delta-Roboter ausgebildet ist.

21. Bearbeitungsvorrichtung nach zumindest einem der Ansprüche 16 bis 20, **dadurch gekennzeichnet, dass** das die Artikel zuführende Fördermittel (4) die Verpackungsvorrichtung (14) zumindest teilweise umschließt.

22. Bearbeitungsvorrichtung nach zumindest einem der Ansprüche 16 bis 21, **dadurch gekennzeichnet, dass** ein Artikel ein Lebensmittel wie eine Fleischware, z.B. eine Wurst, umfasst.
